# FASCICULE DE BREVET EUROPEEN

(11) **EP 1 026 417 B1**
(45) Date de publication et mention de la délivrance du brevet: **09.06.2004**
(21) Numéro de dépôt: 00400270.5
(22) Date de dépôt: 01.02.2000
(51) Int. Cl.: F16D 23/06

(54) **Ensemble synchroniseur pour une transmission d'un véhicule automobile**
Synchronisiereinrichtung für ein Fahrzeuggetriebe
Synchroniser assembly for a vehicle tranmission

(30) Priorité: 02.02.1999 FR 9901175
(43) Date de publication de la demande: 09.08.2000
(73) Titulaire: Peugeot Citroen Automobiles SA, 92200 Neuilly sur Seine (FR)
(72) Inventeur: Le Doare, Jean-Yves, 94400 Vitry sur Seine (FR)
(74) Mandataire: Thinat, Michel

(56) Documents cités:
- EP-A- 0 168 184
- FR-A- 2 390 633
- FR-A- 2 757 915
- FR-A- 2 764 956
- US-A- 4 620 623

## Description

La présente invention concerne un ensemble synchroniseur pour une transmission d'un véhicule automobile.

On sait que le fonctionnement d'un synchroniseur se compose de plusieurs phases à partir de la phase de point mort de la transmission et comprenant la phase d'armement, la phase de synchronisation et la phase de crabotage.

L'objet de l'invention concerne plus particulièrement la phase d'armement du synchroniseur et qui consiste à plaquer, par friction, deux bagues tronconiques de synchronisation, respectivement sur des portées tronconiques conjuguées de deux pignons de transmission, afin de préparer la phase suivante de synchronisation.

Dans les synchroniseurs connus, la phase d'armement s'effectue notamment par un jonc d'armement qui est logé dans le moyeu de synchronisation. Ceci conduit à une structure relativement complexe du synchroniseur et à un assemblage très précis des pièces de celui-ci les unes par rapport aux autres.

FR-A-2 757 915 décrit un dispositif de synchronisation pour boîte de vitesses d'un véhicule automobile et comprenant les différents éléments du préambule de la revendication 1.

Cependant, selon ce dispositif connu, les trois portions rentrantes de chaque jonc d'armement sont logées dans trois rainures ou gorges arquées radialement extérieures de l'anneau de synchronisation correspondant et le positionnement angulaire du jonc par rapport au baladeur nécessite une extrémité coudée à 90° du jonc venant se positionner dans un logement aménagé sur la face périphérique avant de l'anneau de synchronisation.

Ce dispositif a pour inconvénients que ce moyen de positionnement angulaire du jonc est difficile à mettre en place et le jonc peut avoir un défaut de planéité.

La présente invention a pour but d'éliminer les inconvénients ci-dessus en proposant un ensemble synchroniseur pour une transmission d'un véhicule automobile, comprenant les caractéristiques énoncées dans la partie caractérisante de la revendication 1.

Le manchon de crabotage comprend une portion de surface tronconique formant rampe située de façon adjacente à la partie saillante correspondante du jonc pour la contacter et déplacer axialement le jonc tout en le comprimant radialement lors du déplacement axial du manchon de crabotage.

La bague de synchronisation a ses segments arqués logés dans un logement annulaire du moyeu de synchronisation et son perçage central est délimité par une surface tronconique pouvant venir en contact par friction sur une portée tronconique conjuguée du pignon de transmission lors du déplacement axial du manchon de crabotage.

La paroi supérieure du logement annulaire précité des segments de la bague de synchronisation comprend des ajours permettant radialement le passage des portions saillantes du jonc d'armement.

L'ensemble synchroniseur comprend un deuxième jonc d'armement identique au premier jonc d'armement précité, situé de l'autre côté du moyeu de synchronisation symétriquement au premier jonc d'armement et dont les portions rentrantes sont logées respectivement dans trois rainures arquées radialement internes, chacune réalisée dans un segment arqué coaxial faisant saillie d'une face radiale d'une deuxième bague de synchronisation identique à la première bague de synchronisation et symétrique à cette dernière relativement au moyeu de synchronisation, de façon que le déplacement du manchon de crabotage dans le sens axial opposé au sens axial déterminé précité, provoque le déplacement axial dans le même sens du deuxième jonc d'armement, par ses portions saillantes, et de la deuxième bague de synchronisation pour amener celle-ci en engagement par friction avec un deuxième pignon de transmission situé à l'opposé du premier pignon de transmission relativement au moyeu de synchronisation.

Le manchon de crabotage comprend une deuxième portion de surface tronconique formant rampe située de façon adjacente à la portion saillante correspondante du deuxième jonc pour la contacter et déplacer axialement le deuxième jonc tout en le comprimant radialement lors du déplacement axial du manchon de crabotage.

La deuxième bague de synchronisation a ses segments arqués logés dans un logement annulaire du moyeu de synchronisation symétrique au logement annulaire des segments de la première bague de synchronisation et son perçage central est délimité par une surface tronconique pouvant venir en contact par friction sur une portée tronconique conjuguée du deuxième pignon de transmission lors du déplacement axial du manchon de crabotage dans le sens opposé précité.

La paroi supérieure du logement annulaire des segments de la deuxième bague de synchronisation comprend des ajours permettant radialement le passage des portions saillantes du deuxième jonc d'armement.

Chaque portion rentrante de chaque jonc d'armement comprend un fond relié par deux branches latérales respectivement à deux portions saillantes adjacentes du jonc et les deux branches latérales sont inclinées en sens inverse l'une de l'autre.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
La figure 1 est une vue en coupe de l'ensemble synchroniseur de l'invention pour une transmission d'un véhicule automobile.
La figure 2 est une vue en perspective de l'une des bagues de synchronisation de l'ensemble synchroniseur de la figure 1 et comportant un jonc d'armement.
La figure 3 est une vue en plan du jonc d'armement de la figure 2.

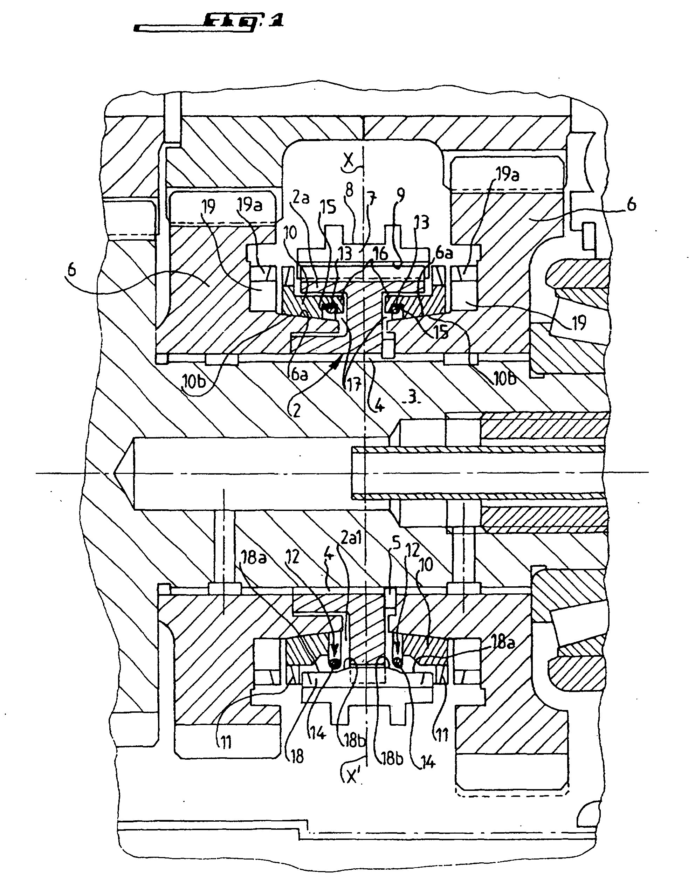

En se reportant aux figures, l'ensemble synchroniseur 1 pour une transmission d'un véhicule automobile comprend un moyeu de synchronisation 2 solidaire en rotation d'un arbre mené 3 et comportant un perçage central cannelé 4 en engrènement avec des cannelures correspondantes de l'arbre 3. Le moyeu de synchronisation 2 est immobilisé en translation sur l'arbre 3 d'une part par un anneau d'arrêt 5 monté dans une gorge périphérique externe de l'arbre 3 et d'autre part par une face radiale de l'un, celui de gauche par rapport à la figure 1, de deux pignons de transmission 6 montés tourillonnant sur l'arbre 3 de part et d'autre du moyeu de synchronisation 2.

L'ensemble synchroniseur 1 comprend également un manchon de crabotage 7 pouvant être déplacé axialement, c'est-à-dire parallèlement à l'arbre 3, par une fourchette de commande (non représentée) engagée dans une gorge radialement externe 8 du manchon de crabotage 7 qui comporte des cannelures internes 9 assurant l'engrènement du manchon 7 sur le pourtour du moyeu de synchronisation 2 tout en permettant le déplacement axial du manchon 7 relativement au moyeu 2.

L'ensemble synchroniseur 1 comprend au moins une bague de synchronisation 10 située au moins à un côté du moyeu de synchronisation 2 de façon adjacente au moyeu et pouvant être déplacée axialement vers le pignon de transmission correspondant 6 suivant le sens de déplacement du manchon de crabotage 7 pour engager par friction la bague de synchronisation 10 avec le pignon de transmission 6 comme on le verra ultérieurement. Comme représenté, l'ensemble synchroniseur comprend deux bagues de synchronisation identiques 10 situées de part et d'autre du moyeu de synchronisation 2 symétriquement à l'axe transversal XX' du moyeu 2 et perpendiculaire à l'arbre 3. Chaque bague de synchronisation 10 comporte une couronne dentée 11 située à l'extérieur du moyeu de synchronisation 2.

Selon l'invention, l'ensemble synchroniseur 1 comprend en outre deux joncs élastiques ouverts d'armement 12, de configuration plane, chacun logé en partie dans l'une correspondante de la bague de synchronisation 10 de façon qu'un déplacement du manchon de crabotage 7 dans un sens déterminé provoque le déplacement concomitant dans le même sens du jonc d'armement correspondant 12 et de la bague de synchronisation associée 10 pour engager par friction la bague 10 avec le pignon de transmission correspondant 6.

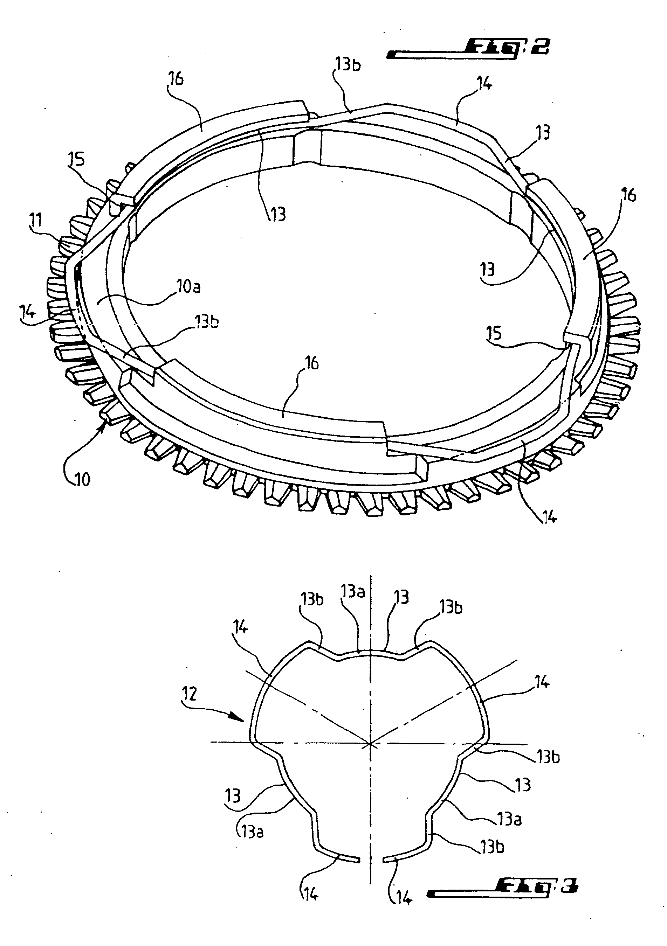

A cet effet, chaque jonc d'armement 12 comprend trois portions rentrantes équidistantes 13 comprenant chacune un fond 13a relié par deux branches latérales 13b respectivement à deux portions saillantes adjacentes 14 du jonc 12, l'une des portions saillantes 14 étant constituée par les deux branches d'extrémités en regard l'une de l'autre du jonc rendant celui-ci ouvert comme cela ressort de la figure 3. Cette figure montre également que les deux branches latérales 13b d'un même fond 13a d'une portion rentrante 13 sont inclinées en sens inverse l'une de l'autre.

En position de montage, les trois portions rentrantes 13 sont logées respectivement dans trois rainures arquées radialement internes 15, chacune réalisée dans un segment arqué 16 coaxial à l'arbre 3 et faisant saillie d'une face radiale 10a de la bague de synchronisation 10 en regard du moyeu de synchronisation 2. Les trois segments arqués 16 de la bague de synchronisation 10 sont logés dans un logement annulaire 17 du moyeu de synchronisation 2 avec, bien entendu, la couronne dentée 11 située à l'extérieur de ce moyeu, et le perçage central de la bague 10 est délimité par une surface tronconique 10b pouvant venir en contact par friction sur une portée tronconique conjuguée 6a du pignon de transmission correspondant 6 lors du déplacement axial du manchon de crabotage 7.

Chaque portion saillante 14 de chaque jonc d'armement 12 fait saillie radialement à l'extérieur de l'espace circonférentiel défini entre deux segments arqués adjacents 16. Ce manchon comprend une portion de surface tronconique formant rampe 18b prolongeant la face radialement interne 18a et située de façon adjacente à chaque partie saillante du jonc 12 de façon qu'un déplacement axial du manchon de crabotage 7 dans le sens correspondant amène les portions de surface tronconique 18b à déplacer axialement le jonc 12 tout en le comprimant radialement. Bien entendu, la paroi supérieure 2a du moyeu de synchronisation 2 définissant le logement annulaire 17 des segments 16 de la bague de synchronisation 10 correspondante comprend des ajours 2a1 situés en regard respectivement des espaces entre segments adjacents pour permettre aux portions saillantes 14 du jonc 12 d'être en appui sur les faces radialement internes 18a du manchon de crabotage 7.

Les deux joncs d'armement identiques 12, les deux bagues de synchronisation identiques 10, les deux logements annulaires 17 des segments 16 des deux bagues 10 et les deux portées tronconiques 6a des pignons de transmission 6 ci-dessus décrits, sont disposés symétriquement à l'axe transversal XX'.

Le fonctionnement de l'ensemble synchroniseur ressort déjà de la description qui en a été faite ci-dessus et va être maintenant expliqué.

Lorsque le manchon de crabotage 7 est déplacé axialement vers la droite si l'on considère la figure 1 par la fourchette de commande, le jonc élastique d'armement correspondant 12 se déplace dans le même sens avec le manchon 7 par les rampes 18b qui viennent en contact avec les portions saillantes 14 du jonc 12 pour le déplacer et le comprimer axialement. Ce déplacement du jonc 12 provoque simultanément le déplacement de la bague de synchronisation correspondante 10 dont la surface tronconique centrale 10b vient en contact par friction sur la portée tronconique conjuguée 6a du pignon de transmission correspondant 6, de sorte que ce dernier peut tourner avec l'arbre 3. En continuant le déplacement axial du manchon de crabotage 7 vers la droite, les rampes 18b continuent de comprimer radialement le jonc d'armement 12 et les dents 9 du manchon de crabotage 7 s'engagent avec les dents 11 de la bague de synchronisation 10. Un déplacement supplémentaire du manchon de crabotage 7 vers la droite amène ensuite les dents 9 de celui-ci à s'engager avec les dents 19a d'une couronne de crabotage 19 solidaire du pignon de transmission correspondant 6, résultant alors en une rotation du moyeu 2, du manchon 7, de la bague de synchronisation 10 et du pignon 6.

Le déplacement du manchon de crabotage 7 vers la gauche si l'on considère la figure 1 provoque un déplacement axial du jonc d'armement 12 et de la bague de synchronisation 10 situés à gauche du moyeu de synchronisation 2 de façon identique au déplacement axial précédemment décrit du jonc d'armement 12 et la bague de synchronisation 10 à droite du moyeu de sorte qu'il est inutile de détailler à nouveau les conséquences du déplacement à gauche du manchon de crabotage 7.

Chaque jonc d'armement 12 étant logé par ses portions rentrantes 13 dans les rainures arquées 15 des segments 16, celles-ci limitent les défauts de planéité du jonc, ce que rend plus précise la garde au léchage et en conséquence réduit les frottements parasites du synchroniseur dans la boîte de vitesses. En outre, lors du début de la phase d'armement, il n'y a pas de frottement entre le jonc 12 et le moyeu synchroniseur 2, ce qui améliore le rendement de l'armement.

## Revendications

1. Ensemble synchroniseur (1) pour une transmission d'un véhicule automobile, comprenant un moyeu de synchronisation (2) solidaire d'un arbre mené (3) ; un manchon de crabotage (7) monté sur le moyeu de synchronisation (2) en engrènement avec ce dernier et pouvant être déplacé axialement relativement au moyeu de synchronisation (2) par une fourchette de commande ; une bague de synchronisation (10) située adjacente à au moins un côté du moyeu de synchronisation (2) ; un pignon de transmission (6) à couronne dentée de crabotage (19) monté tourillonnant sur l'arbre mené (3) en étant axialement espacé de la bague de synchronisation (10) qui peut être engagée par friction avec le pignon de transmission (6) lors d'un déplacement axial du manchon de crabotage (7) ; et au moins un jonc élastique ouvert d'armement (12) de configuration plane, comprenant trois portions rentrantes (13), chacune située entre deux portions saillantes adjacentes (14) du jonc (12), et logées respectivement dans trois rainures arquées ; **caractérisé en ce que** les rainures arquées sont des rainures radialement internes (15), chacune réalisée dans un segment arqué coaxial (16) faisant saillie d'une face radiale (10a) de la bague de synchronisation (10) en regard du moyeu de synchronisation (2), chaque portion saillante (14) du jonc d'armement (12) faisant saillie radialement à l'extérieur de l'espace circonférentiel entre deux segments arqués adjacents (16) et le manchon de crabotage (7) est agencé pour contacter, lors de son déplacement axial relatif dans un sens déterminé, les côtés des portions saillantes (14) du jonc d'armement (12) pour déplacer axialement et concomitamment le jonc d'armement (12) et la bague de synchronisation (10) qui est amenée en engagement par friction avec le pignon de transmission (6).

2. Ensemble synchroniseur selon la revendication 1, **caractérisé en ce que** le manchon de crabotage (7) comprend une portion de surface tronconique formant rampe (18b) située de façon adjacente à la partie saillante correspondante (14) du jonc (12) pour la contacter et déplacer axialement le jonc (12) tout en le comprimant radialement lors du déplacement axial du manchon de crabotage (7).

3. Ensemble selon la revendication 1 ou 2, **caractérisé en ce que** la bague de synchronisation (10) a ses segments arqués (16) logés dans un logement annulaire (17) du moyeu de synchronisation (2) et son perçage central est délimité par une surface tronconique (10b) pouvant venir en contact par friction sur une portée tronconique conjuguée (6a) du pignon de transmission (6) lors du déplacement axial du manchon de crabotage (7).

4. Ensemble synchroniseur selon la revendication 3, **caractérisé en ce que** la paroi supérieure du logement annulaire précité (17) des segments (16) de la bague de synchronisation (10) comprend des ajours (2a1) permettant radialement le passage des portions saillantes (14) du jonc d'armement (12).

5. Ensemble synchroniseur selon l'une des revendications précédentes, **caractérisé en ce qu'**il comprend un deuxième jonc d'armement (12) identique au premier jonc d'armement (12) précité, situé de l'autre côté du moyeu de synchronisation (2) symétriquement au premier jonc d'armement (12) et dont les portions rentrantes (13) sont logées respectivement dans trois rainures arquées radialement internes (15), chacune réalisée dans un segment arqué coaxial (16) faisant saillie d'une face radiale (10a) d'une deuxième bague de synchronisation (10) identique à la première bague de synchronisation (10) et symétrique à cette dernière relativement au moyeu de synchronisation (10), de façon que le déplacement du manchon de crabotage (7) dans le sens axial opposé au sens axial déterminé précité, provoque le déplacement axial dans le même sens du deuxième jonc d'armement (12), par ses portions saillantes (14), et de la deuxième bague de synchronisation (10) pour amener celle-ci en engagement par friction avec un deuxième pignon de transmission (6) situé à l'opposé du premier pignon de transmission (6) relativement au moyeu de synchronisation (2).

6. Ensemble synchroniseur selon la revendication 5, **caractérisé en ce que** le manchon de crabotage (7) comprend une deuxième portion de surface tronconique formant rampe (18b) située de façon adjacente à la partie saillante correspondante (14) de ce jonc (12) pour la contacter et déplacer axialement le deuxième jonc (12) tout en le comprimant radialement lors du déplacement axial du manchon de crabotage (7).

7. Ensemble synchroniseur selon la revendication 5 ou 6, **caractérisé en ce que** la deuxième bague de synchronisation (10) a ses segments arqués (7) logés dans un logement annulaire (17) du moyeu de synchronisation (2) et son perçage central est délimité par une surface tronconique (10b) pouvant venir en contact par friction sur une portée tronconique conjuguée (6a) du deuxième pignon de transmission (6) lors du déplacement axial du manchon de crabotage (7).

8. Ensemble synchroniseur selon la revendication 7, **caractérisé en ce que** la paroi supérieure du logement annulaire (17) des segments (16) de la deuxième bague de synchronisation (10) comprend des ajours (2a1) permettant radialement le passage des portions saillantes (14) du deuxième jonc d'armement (12).

9. Ensemble synchroniseur selon l'une des revendications précédentes, **caractérisé en ce que** chaque portion rentrante (13) du jonc d'armement (12) comprend un fond (13a) relié par deux branches latérales (13b) respectivement à deux portions saillantes adjacentes (14) du jonc (12) et les deux branches latérales (13b) sont inclinées en sens inverse l'une de l'autre.

## Patentansprüche

1. Synchronisiereinrichtung (1) für ein Kraftfahrzeuggetriebe, mit einer Synchronnabe (2), die fest mit einer Abtriebswelle (3) verbunden ist, eine Kuppelmuffe (7), die an der Synchronnabe (2) in Eingriff mit dieser gelagert ist und relativ zur Synchronnabe (2) über eine Schaltgabel axial verlagerbar ist, mit einem Synchronring (10), der in Angrenzung an zumindest einer Seite der Synchronnabe (2) liegt, einem Getrieberad (6) mit Kuppelzahnkranz (19), das drehbar an der Abtriebswelle (3) gelagert und dabei axial vom Synchronring (10) entfernt liegt, der bei axialer Verlagerung der Kuppelmuffe (7) mit dem Getrieberad (6) in Reibeingriff gebracht werden kann, und mit zumindest einem offenen Verstärkungsfederring (12) flacher Gestalt, der drei rückspringende Abschnitte (13) enthält, von denen jeder zwischen zwei angrenzenden vorspringenden Abschnitten (14) des Federrings (12) liegt und die in drei jeweiligen bogenförmigen Rillen aufgenommen sind, **dadurch gekennzeichnet, dass** die bogenförmigen Rillen radial innere Rillen (15) sind, die jeweils in einem koaxial verlaufenden Bogensegment (16) ausgebildet sind, das von der radialen Seite (10a) des Synchronrings (10), der Synchronnabe (2) gegenüberliegend, vorspringt, wobei jeder vorspringende Abschnitt (14) des Verstärkungsfederrings (12) radial außerhalb des Umfangsraums zwischen zwei aneinandergrenzenden Bogensegmenten (16) vorspringt, und die Kuppelmuffe (7) dazu vorgesehen ist, bei deren axialen Relativverlagerung in einer bestimmten Richtung die Seiten der vorspringenden Abschnitte (14) des Verstärkungsfederrings (12) zu kontaktieren, um den Verstärkungsfederring (12) und den Synchronring (10), der mit dem Getrieberad (6) in Reibeingriff gebracht wird, gleichzeitig axial zu verlagern.

2. Synchronisiereinrichtung nach Anspruch 1, **dadurch gekennzeichnet, dass** die Kuppelmuffe (7) einen kegelstumpfförmigen Rampenflächenabschnitt (18b) enthält, der in Angrenzung an den entsprechenden vorspringenden Teil (14) des Federrings (12) liegt, um diesen Teil zu kontaktieren und den Federring (12) axial zu verlagern, wobei dieser bei der axialen Verlagerung der Kuppelmuffe (7) radial zusammengedrückt wird.

3. Synchronisiereinrichtung nach Anspruch 1 oder 2, **dadurch gekennzeichnet, dass** der Synchronring (10) mit seinen Bogensegmenten (16) in einer ringförmigen Aufnahme (17) der Synchronnabe (2) aufgenommen ist und seine Mittelbohrung von einer kegelstumpfförmigen Fläche (10b) begrenzt wird, die bei axialer Verlagerung der Kuppelmuffe (7) mit einer entsprechenden kegelstumpfförmigen Abstützung (6a) des Getrieberads (6) in Reibkontakt gelangen kann.

4. Synchronisiereinrichtung nach Anspruch 3, **dadurch gekennzeichnet, dass** die obere Wand der vorgenannten ringförmigen Aufnahme (17) der Segmente (16) des Synchronrings (10) Durchbrüche (2a1) aufweist, die den radialen Durchtritt der vorspringenden Abschnitte (14) des Verstärkungsfederrings (12) gestatten.

5. Synchronisiereinrichtung nach einem der vorangehenden Ansprüche, **dadurch gekennzeichnet, dass** sie einen zweiten Verstärkungsfederring (12) enthält, der identisch zu dem ersten Verstärkungsfederring (12) ist, sich auf der anderen Seite der Synchronnabe (2) symmetrisch zum ersten Verstärkungsfederring (12) befindet und dessen rückspringende Abschnitte (13) in drei jeweiligen bogenförmigen, radial inneren Rillen (15) aufgenommen sind, von denen jede in einem koaxial verlaufenden Bogensegment (16) ausgebildet ist, das von der radialen Seite (10a) eines zweiten Synchronrings (10) vorspringt, der identisch zum ersten Synchronring (10) ist und bezüglich der Synchronnabe (2) symmetrisch zu diesem verläuft, so dass die Verlagerung der Kuppelmuffe (7) in axialer Richtung entgegengesetzt zur vorgenannten, bestimmten axialen Richtung eine axiale Verlagerung des zweiten Verstärkungsfederrings (12) über seine vorspringenden Abschnitte (14) sowie des zweiten Synchronrings (10) in der gleichen Richtung hervorruft, um diesen in Reibeingriff mit einem zweiten Getrieberad (6) zu bringen, das bezüglich der Synchronnabe (2) dem ersten Getrieberad (6) gegenüberliegt.

6. Synchronisiereinrichtung nach Anspruch 5, **dadurch gekennzeichnet, dass** die Kuppelmuffe (7) einen zweiten kegelstumpfförmigen Rampenflächenabschnitt (18b) enthält, der in Angrenzung an den entsprechenden vorspringenden Teil (14) dieses Federrings (12) liegt, um diesen Teil zu kontaktieren und den zweiten Federring (12) axial zu verlagern, wobei dieser bei der axialen Verlagerung der Kuppelmuffe (7) radial zusammengedrückt wird.

7. Synchronisiereinrichtung nach Anspruch 5 oder 6, **dadurch gekennzeichnet, dass** der zweite Synchronring (10) mit seinen Bogensegmenten (16) in einer ringförmigen Aufnahme (17) der Synchronnabe (2) aufgenommen ist und seine Mittelbohrung von einer kegelstumpfförmigen Fläche (10b) begrenzt wird, die bei axialer Verlagerung der Kuppelmuffe (7) mit einer entsprechenden kegelstumpfförmigen Abstützung (6a) des zweiten Getrieberads (6) in Reibkontakt gelangen kann.

8. Synchronisiereinrichtung nach Anspruch 7, **dadurch gekennzeichnet, dass** die obere Wand der ringförmigen Aufnahme (17) der Segmente (16) des zweiten Synchronrings (10) Durchbrüche (2a1) aufweist, die den radialen Durchtritt der vorspringenden Abschnitte (14) des zweiten Verstärkungsfederrings (12) gestatten.

9. Synchronisiereinrichtung nach einem der vorangehenden Ansprüche, **dadurch gekennzeichnet, dass** jeder rückspringende Abschnitt (13) des Verstärkungsfederrings (12) einen Boden (13a) enthält, der über zwei Seitenschenkel (13b) mit zwei jeweiligen, angrenzenden vorspringenden Abschnitten (14) des Federrings (12) verbunden ist, und die beiden Seitenschenkel (13b) in entgegengesetzten Richtungen zueinander geneigt sind.

## Claims

1. Synchronizer assembly (1) for a motor vehicle transmission, comprising a synchronizing hub (2) secured to a driven shaft (3); a dog sleeve (7) mounted on the synchronizing hub (2) in mesh with the latter and being able to displaced axially relative to the synchronizing hub (2) by means of a selector fork; a synchronizing ring (10) situated adjacent to at least one side of the synchronizing hub (2); a transmission gear (6) having a positively engaging annulus gear (19) and mounted so that it can swivel around the driven shaft (3) while being axially spaced from the synchronizing ring (10) which may be engaged by friction with the transmission gear (6) during an axial displacement of the dog sleeve (7); and at least one open setting spring ring (12) of planar configuration comprising three re-entrant portions (13), each situated between two adjacent protruding portions (14) of the spring ring (12) and being respectively housed in three arced grooves; **characterized in that** the arced grooves are radially inner grooves (15), each made in a coaxial arced segment (16) projecting from a radial face (10a) of the synchronizing ring (10) facing the synchronizing hub (2), each projecting portion (14) of the setting spring ring (12) projecting radially outside the circumferential space between two adjacent arced segments (16), and the dog sleeve (7) is designed to make contact, during its relative axial displacement in a given direction, with the sides of the projecting portions (14) of the setting spring ring (12) in order to displace, axially and concomitantly, the setting spring ring (12) and the synchronizing ring (10) which is brought into frictional engagement with the transmission gear (6).

2. Synchronizer assembly according to Claim 1, **characterized in that** the dog sleeve (7) comprises a frustoconical surface portion forming a ramp (18b) situated adjacently to the corresponding projecting part (14) of the spring ring (12) in order to make contact with the said part and to displace the spring ring (12) axially while compressing it radially during the axial displacement of the dog sleeve (7).

3. Assembly according to Claim 1 or 2, **characterized in that** the synchronizing ring (10) has its arced segments (16) housed in an annular housing (17) of the synchronizing hub (2) and its central bore is delimited by a frustoconical surface (10b) which can come into frictional contact with a complementary frustoconical bearing surface (6a) of the transmission gear (6) during the axial displacement of the dog sleeve (7).

4. Synchronizer assembly according to Claim 3, **characterized in that** the upper wall of the aforementioned annular housing (17) for the segments (16) of the synchronizing ring (10) comprises openings (2a1) allowing the radial passage of the projecting portions (14) of the setting spring ring (12).

5. Synchronizer assembly according to one of the preceding claims, **characterized in that** it comprises a second setting spring ring (12) identical to the aforementioned first setting spring ring (12), situated on the other side of the synchronizing hub (2) symmetrically to the first setting spring ring (12) and of which the re-entrant portions (13) are respectively housed in three radially inner arced grooves (15), each made in a coaxial arced segment (16) projecting from a radial face (10a) of a second synchronizing ring (10) identical to the first synchronizing ring (10) and symmetrical to the latter relative to the synchronizing hub (10), such that the displacement of the dog sleeve (7) in the axial direction opposite to the aforementioned given axial direction causes the second setting spring ring (12), by way of its projecting portions (14), and the second synchronizing ring (10) to be displaced axially in the same direction so as to bring this second synchronizing ring into frictional engagement with a second transmission gear (6) situated at the opposite side from the first transmission gear (6) relative to the synchronizing hub (2).

6. Synchronizer assembly according to Claim 5, **characterized in that** the dog sleeve (7) comprises a second frustoconical surface portion forming a ramp (18b) situated adjacently to the corresponding projecting part (14) of this spring ring (12) in order to make contact with it and to displace the second spring ring (12) axially while compressing it radially during the axial displacement of the dog sleeve (7).

7. Synchronizer assembly according to Claim 5 or 6, **characterized in that** the second synchronizing ring (10) has its arced segments (7) housed in an annular housing (17) of the synchronizing hub (2) and its central bore is delimited by a frustoconical surface (10b) which can come into frictional contact with a complementary frustoconical bearing surface (6a) of the second transmission gear (6) during the axial displacement of the dog sleeve (7).

8. Synchronizer assembly according to Claim 7, **characterized in that** the upper wall of the annular housing (17) for the segments (16) of the second synchronizing ring (10) comprises openings (2a1) allowing the radial passage of the projecting portions (14) of the second setting spring ring (12).

9. Synchronizer assembly according to one of the preceding claims, **characterized in that** each re-entrant portion (13) of the setting spring ring (12) comprises a base (13a) connected by two lateral branches (13b) to two adjacent projecting portions (14) of the spring ring (12), respectively, and the two lateral branches (13b) are oppositely inclined to one another.
